# EUROPEAN PATENT SPECIFICATION

(11) **EP 4 439 126 B1**
(45) Date of publication and mention of the grant of the patent: **11.03.2026**
(21) Application number: 22894662.0
(22) Date of filing: 08.11.2022
(51) Int. Cl.: G05D 1/242, G05D 1/246, G05D 1/622, G01C 21/20, G01S 17/89

(54) **METHOD FOR IMPROVING OBSTACLE MARKING PRECISION OF ROBOT**
VERFAHREN ZUR VERBESSERUNG DER HINDERNISMARKIERUNGSPRÄZISION EINES ROBOTERS
PROCÉDÉ POUR AMÉLIORER LA PRÉCISION DE MARQUAGE D'OBSTACLE D'UN ROBOT

(30) Priority: 22.11.2021 CN 202111382649
(43) Date of publication of application: 02.10.2024
(73) Proprietor: Amicro Semiconductor Co., Ltd., Hengqin New District, Zhuhai City Guangdong 519000 (CN)
(72) Inventor: SUN, Ming, Zhuhai, Guangdong 519000 (CN); CHEN, Zhuobiao, Zhuhai, Guangdong 519000 (CN); ZHOU, Hewen, Zhuhai, Guangdong 519000 (CN); XU, Songzhou, Zhuhai, Guangdong 519000 (CN); HUANG, Huibao, Zhuhai, Guangdong 519000 (CN); XIONG, Kun, Zhuhai, Guangdong 519000 (CN)
(74) Representative: Murgitroyd & Company
(86) International application number: PCT/CN2022/130463
(87) International publication number: WO 2023/088125

(56) References cited:
- WO-A1-2019/068214
- CN-A- 110 260 856
- CN-A- 110 530 368
- CN-A- 110 858 076
- CN-A- 111 551 953
- CN-A- 112 180 910
- CN-A- 112 967 283
- CN-A- 113 284 240
- CN-A- 113 510 703
- US-A1- 2020 409 387
- US-B2- 9 020 637

## Description

### TECHNICAL FIELD

The present application relates to the field of intelligent robot technology, specifically to a method for robots to improve the accuracy of obstacle labeling.

### BACKGROUND OF TECHNOLOGY

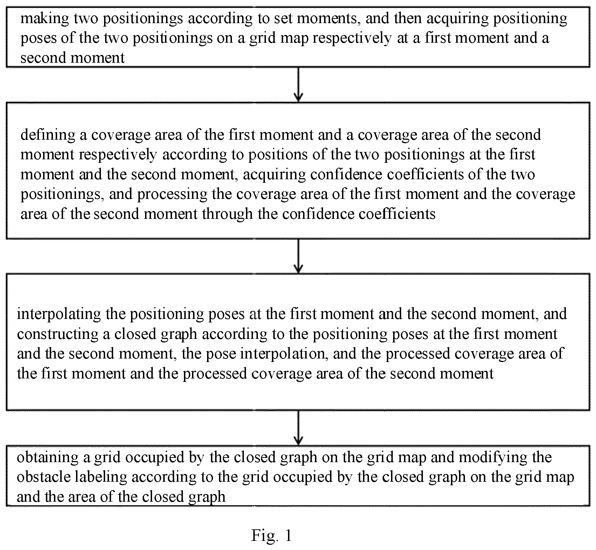

For a robot that uses a laser positioning, there will inevitably be some obstacles that are invisible to the laser in its environment, such as transparent glass, mirrors, objects with low reflectivity, low objects, etc. The robot needs to label them on the map for better real-time motion, navigation planning, etc. To detect these obstacles, robots are typically equipped with physical collision sensors and some other optical sensors. Obviously, the optical sensor is limited by its optical characteristics and installation location, and cannot accurately detect the above-mentioned obstacles. Physical collisions have to be used as a last detection method to detect the above-mentioned types of obstacles, so that the robot can adjust its motion posture, navigation planning, etc. A physical collision sensor is limited by its installation location and installation quantity, so it cannot detect obstacles accurately, and can only label the collision location roughly. In order to avoid repeated collisions, such obstacles that cannot be accurately detected have to be labeled slightly more. However, if there are too many labels, the area that can be navigated may become an area that cannot be navigated, which will make the robot go far and reduce the operating efficiency. A patent of US9020637B2 (cf. figures 1, 4A-4C, 6-9), discloses a method for operating a robot based on range data acquired with a laser sensor 510 and bumper data acquired with a bumper sensor 530. Any obstacle that is encountered is mapped (cf. figure 6: occupancy grid map 620), wherein the navigation system 600 may include a localization quality estimator 650 for determining a confidence in the localization of the robot 100, and the SLAM controller 610 may build the map 620 only when the robot 100 is well localized (i.e., has a good confidence of its location).

### SUMMARY OF THE INVENTION

In order to solve the above-mentioned technical defects, the technical solution of the present invention discloses a method for robots to improve the accuracy of an obstacle labeling. The invention as defined in the independent claim corrects the obstacle area detected by a physical collision by combining discrete positioning poses, a pose interpolation, and a positioning confidence coefficient to improve the accuracy of the obstacle labeling. The specific technical scheme is as follows: a method for robots to improve the accuracy of obstacle labeling comprising: S1, making two positioning of a robot according to different moments, and then acquiring positioning poses of the two positionings on a grid map respectively at a first moment and a second moment of the different moments; S2, defining a coverage area of the first moment and a coverage area of the second moment respectively according to positions of the two positionings at the first moment and the second moment, calculating confidence coefficients of the two positionings, and adjusting the coverage area of the first moment and the coverage area of the second moment according to the confidence coefficients; S3, interpolating the positioning poses at the first moment and the second moment to obtain a pose interpolation, and constructing a closed graph according to the positioning poses at the first moment and the second moment, the pose interpolation and the adjusted coverage area of the first moment and the adjusted coverage area of the second moment; and S4, obtaining a grid occupied by the closed graph on the grid map and correcting label the obstacle labeling detected by a physical collision sensor according to the grid occupied by the closed graph on the grid map and the area of the closed graph.

Furthermore, in the step S2, the step of defining a coverage area of the first moment and a coverage area of the second moment respectively according to positions of the two positionings at the first moment and the second moment comprises: obtaining the positions of the two positionings on the grid map, and then respectively using the positions of the two positionings as circle centers, with a radius defined by a set value to make circles to obtain the coverage area of the first moment and the coverage area of the second moment.

Furthermore, in the step S2, the step of calculating confidence coefficients of the two positionings, comprises steps of: A1: obtaining point clouds participating in a laser positioning, randomly selecting one of the point clouds, and defining a grid area based on the position of the one point cloud on the grid map; A2: calculating a probability value of the one point cloud on the grid map based upon the information of the grid area, repeating steps A1 and A2 until the probability values of all point clouds participating in the laser positioning on the grid map are obtained; A3: obtaining detected distances of all point clouds participating in the laser positioning, and then filtering the point clouds to obtain a quantity value of the filtered point clouds; A4: obtaining a probability weighted average value through the probability values and detected distances of all point clouds participating in the laser positioning on the grid map; and A5: obtaining the confidence coefficient of a current positioning based on the probability weighted average value, the quantity value of all point clouds participating in the laser positioning, the quantity value of the filtered point clouds, and the quantity value of point clouds set to participate in the laser positioning.

Furthermore, in step A1, the step of defining the grid area based on the position of the one point cloud on the grid map, comprises: obtaining the position of the one point cloud on the grid map, and then finding a grid intersection on the grid map closest to the position of the one point cloud; and defining a grid area having N*N grids on the grid map with the grid intersection as the center; wherein, N is a positive integer.

Furthermore, the step of calculating the probability value of the one point cloud on the grid map based upon the information of the grid area adopts a bicubic interpolation method, which comprises: obtaining a distance between each grid in the grid area and the one point cloud, and then obtaining corresponding coefficients of rows and columns in the grid area according to the distance; obtaining a corresponding weight of each grid according to the corresponding coefficients of the rows and columns, and then obtaining a pixel value of the one point cloud through the weight value and by using a summation formula, and then obtaining the probability value corresponding to the pixel value.

Furthermore, the step of adjusting the coverage area of the first moment and the coverage area of the second moment according to the confidence coefficients, comprises: obtaining deviating distances that are negatively correlated with the confidence coefficients according to the confidence coefficients of the two positionings, and then having a comparison on the deviating distances of the two positionings; and obtaining a maximum deviating distance in the two positionings, and then shrinking the coverage area of the first moment and the coverage area of the second moment uniformly inward by the maximum deviating distance.

Furthermore, in step S3, the step of interpolating the positioning poses at the first moment and the second moment, comprises: inserting an intermediate pose between the positioning poses at the first moment and the second moment.

Furthermore, in step S3, the step of constructing a closed graph according to the positioning poses at the first moment and the second moment, the pose interpolation, and the adjusted coverage area of the first moment and the adjusted coverage area of the second moment, comprises: making a straight line perpendicular to the right front of the robot at the position of the positioning of the first moment, such a straight line having two intersection points with the edge of the adjusted coverage area of the first moment, and obtaining a first line segment of distance with the two intersection points as endpoints; making a straight line perpendicular to the right front of the robot at the position of the positioning of the second moment, such a straight line having two intersection points with the edge of the adjusted coverage area of the second moment, and obtaining a second line segment of distance with the two intersection points as endpoints; making a straight line perpendicular to the right front of the robot at the position of the intermediate pose on the grid map, and then obtaining a third line segment for distance according to the first line segment of distance or the second line segment of distance; and connecting the endpoints of the first line segment of distance, the second line segment of distance and the third line segment of distance with the edges of the adjusted coverage area of the first moment and the adjusted coverage area of the second moment, so as to obtain the closed graph that is a figure having a largest area; wherein, the positioning pose includes a right frontal orientation of the robot at a position of a current positioning.

Furthermore, in step S4, the step of correcting the obstacle labeling according to the grid occupied by the closed graph on the grid map and the area of the closed graph comprises: obtaining the grid occupied by the closed graph on the grid map and the area of the closed graph; obtaining an intersection area between the grid occupied by each closed graph on the grid map and the area of the closed graph; and deleting the obstacle labeling if the intersection area is greater than a set threshold and there is an obstacle labeling in the grid.

Furthermore, the step of obtaining the intersection area between the grid occupied by each closed graph on the grid map and the area of the closed graph comprises: obtaining the area of each grid, and then obtaining positions of edges of the closed graph on each grid to identify a figure located in the closed graph and composed of the edges of the closed graph and the edges of the grid; dividing the figure located in the closed graph and composed of the edges of the closed graph and the edges of the grid into several quadrilaterals, and obtaining the area of each of the quadrilaterals; and totaling the area of each of the quadrilaterals to get the area of the figure located in the closed graph and composed of the edges of the closed graph and the edges of the grid.

Compared with the existing technology, the technical solution of this application combines discrete positioning poses, a pose interpolation, and positioning confidence coefficients to correct the obstacle area detected by a physical collision and improve the accuracy of the obstacle labeling.

### BRIEF DESCRIPTION OF THE DRAWINGS

Figure 1 is a flow chart of a method for a robot to improve the accuracy of an obstacle labeling according to an embodiment of the present invention.
Figure 2 is a flow chart of a method for evaluating a laser positioning confidence coefficient according to an embodiment of the present invention.
Figure 3 is a schematic diagram of a grid map of an embodiment of the present invention.
Figure 4 is a schematic diagram of the positioning poses of an embodiment of the present invention.

### DETAILED DESCRIPTION OF THE EMBODIMENS

The specific embodiments of the present invention will be further described below in conjunction with the accompanying drawings. It should be pointed out that the following detailed description is exemplary and is intended to provide further explanation to the present application. Unless defined otherwise, all technical and scientific terms used herein have the same meaning as commonly understood by one of ordinary skill in the art to which this application belongs.

As shown in figure 1, a method for a robot to improve the accuracy of an obstacle labeling comprises steps S1-S4. In step S1, it comprises making two positionings by the robot according to set moments and a point cloud, and then acquiring positioning poses of the two positionings on a grid map respectively at a first moment and a second moment. The way of positioning by means of the point cloud is one of implementation methods, and other positioning methods can also be used, without specific limitations. In the process of making the position the position and the positionings pose of the robot on the grid map are known technology and will not be repeated here. In step S2, it comprises defining a coverage area of the first moment and a coverage area of the second moment respectively according to positions of the two positioning at the first moment and the second moment, calculating confidence coefficients of the two positionings, and adjusting the coverage area of the first moment and the coverage area of the second moment according to the confidence coefficients. In step S3, it comprises interpolating the positioning poses at the first moment and the second moment, and constructing a closed graph according to the positioning poses at the first moment and the second moment, the pose interpolation and the adjusted coverage area of the first moment and the adjusted coverage area of the second moment. In step S4, it comprises obtaining a grid occupied by the closed graph on the grid map and correcting the obstacle labeling detected by a physical collision sensor according to the grid occupied by the closed graph on the grid map and the area of the closed graph.

As one of the embodiments, in step S2, the step of defining a coverage area of the first moment and a coverage area of the second moment respectively according to positions of the two positionings at the first moment and the second moment comprises: obtaining the positions of the two positionings on the grid map by the robot, and then respectively using the positions of the two positionings at the first moment and the second moment as circle centers, with a radius defined by a set value to make circles to obtain the coverage area of the first moment and the coverage area of the second moment.

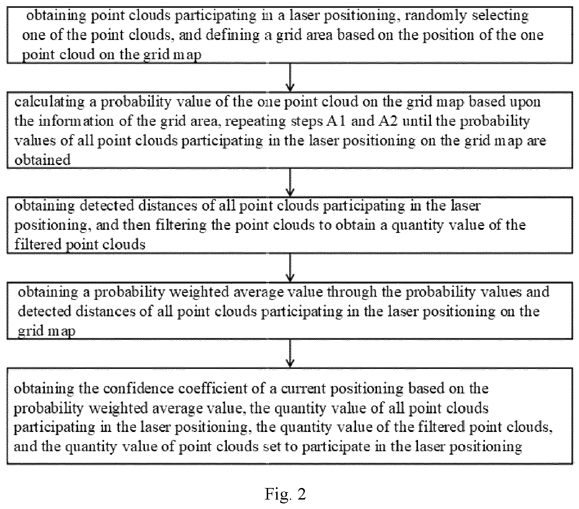

As one of the embodiments, in step S2, the step of obtaining the confidence coefficient of the two positionings by the robot is performed by the robot after each positioning. The evaluation method is shown in figure 2. In an evaluation method for the confidence coefficient of a laser positioning, the laser radar robot will use laser frames for positioning during operation, and the confidence coefficients of the positionings corresponding to different numbers of laser frames obtained at different moments and different locations/positions should have different. For example, when it is moving in a small space, the acquired laser frame changes little, and the confidence coefficient should gradually increase with time. In exploring a new scene, the robot continuously enters a new space, and the laser frame changes greatly, the confidence coefficient of the positioning should be reduced. Therefore, it is necessary to evaluate the confidence coefficient of the laser positioning, and the method includes the following steps: Step A1: The laser radar robot obtains point clouds participating in the laser positioning, randomly select one of the point clouds, and define a grid area based on the position of the one point cloud on the grid map. The robot generally uses a frame of laser data for the positioning. After the laser data is used for the positioning, the quantity value of the one point cloud after the positioning is recorded. Then, the step of randomly selecting one of the point clouds and defining a grid area based on the position of the one point cloud on the grid map includes the following steps: obtaining the position of the one point cloud on the grid map, and then finding a grid intersection on the grid map closest to the position of the one point cloud; and defining a grid area having N*N grids on the grid map with the grid intersection as the center; wherein, N is a positive integer. After the grid area is defined, for a grid located in a grid area outside the grid map, it is filled with a median value of the probability. The median value of the probability means that the value represented by it corresponds to a situation having an obstacle in a probability of 50% or a situation being empty in a probability of 50%. For example, if a grid uses a range of 0to 1 to linearly represent the probability that the corresponding area is an obstacle, the median value of the probability is 0.5.

Step A2: The laser radar robot calculates the probability value of the one point cloud on the grid map based upon the information of the grid area, repeat steps A1 and A2 until the probability values of all point clouds participating in the laser positioning on the grid map are obtained. The step of calculating the probability value of the one point cloud on the grid map based upon the information of the grid area adopts a bicubic interpolation method. The bicubic interpolation is a complex interpolation method, which can create a smoother image edge than a bilinear interpolation, and is a method for "interpolating" or increasing the number/density of "pixels" in an image. Graphical data is usually augmented by interpolation techniques so that when it is printed or otherwise output, the print area and/or resolution can be increased. The method includes the following steps: obtaining a distance between each grid in the grid area and the one point cloud, and then obtaining corresponding coefficients of rows and columns in the grid area according to the distance; obtaining a corresponding weight of each grid according to the corresponding coefficients of the rows and columns, and then obtaining a pixel value of the one point cloud through the weight value and by using a summation formula, and then obtaining the probability value corresponding to the pixel value. The probability values of the point clouds participating in the laser positioning on the grid map are randomly calculated out one by one until the probability values of the point clouds participating in the laser positioning on the grid map are obtained, and then a next step is entered.

Step A3: The laser radar robot obtains detected distances of all point clouds participating in the laser positioning, and then filter the point clouds to obtain a quantity value of the filtered point clouds. In step S3, the robot obtains the detected distances of the point clouds during a process of obtaining the point clouds by the laser radar and filters them to obtain the number of filtered point clouds, then obtains the number of the point clouds having a probability value greater than the median probability value for subsequent calculations.

Step A4: The robot obtains a probability weighted average value through the probability values and detected distances of all point clouds participating in the laser positioning on the grid map. It is mainly calculated by the following formula: A= (S₁ × T^{L1} + S₂×T^{L2} +... + S_{N}×T^{LN}) /N; wherein, S is the probability value of a point cloud, T is a predetermined distance weight, L is the detected distance of the point cloud obtained by the laser radar, and N is the number of point clouds participating in the laser positioning. The predetermined distance weight T is set according to the actual situation and is not limited.

Step A5: Based on the probability weighted average value, the quantity value of all point clouds participating in the laser positioning, the quantity value of the filtered point clouds and the quantity value of point clouds set to participating in the laser positioning, the confidence coefficient of a current positioning is obtained. It is mainly calculated by the following formula: C=A×R^{(N/M-1)} × K^{(F/N-1)}; wherein, R is a weight for the number of laser points, K is a weight for the number of hit points, M is the number of point clouds that are set to participate in the laser positioning, and F is the number of filtered point clouds, where N is less than or equal to M. Every time the robot performs a positioning based upon laser data, it evaluates the positioning reliability based upon the point cloud data involved in the laser positioning. The accuracy of each positioning is judged according to the confidence coefficient, and one of the positionings is selected as the standard for cleaning, mapping, etc.

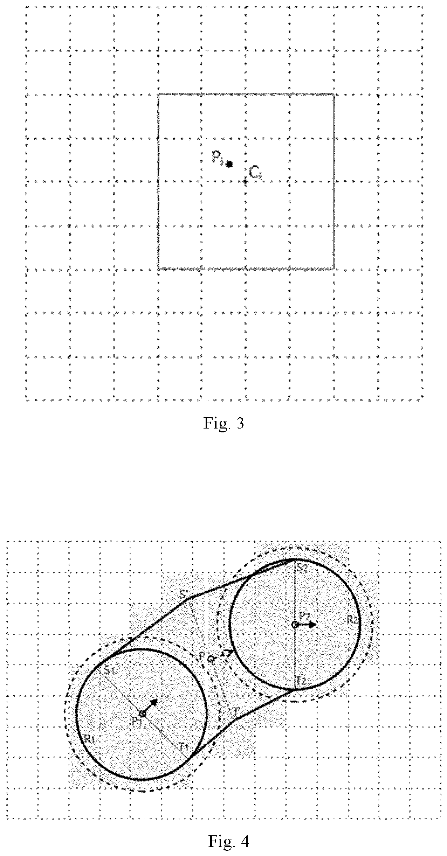

As shown in figure 3, the robot randomly selects one point cloud from the point cloud participating in the laser positioning, then obtains a point Pi of the point cloud on the grid map, and then finds a grid intersection point Ci closest to the point Pi and selects surrounding 4*4 grids to form a grid area, with the grid intersection point Ci as a center. For any grid in the grid area exceeds the grid map, the grid outside the grid map is filled with the probability median value or the initial value of the grid map. Then the bicubic interpolation is performed on the 4x4 grid to obtain the probability value Si corresponding to the point Pi on the grid map. This method is a conventional technique and will not be repeated here. Then, the robot record a detected distance L between Pi and the laser radar observation point (generally the center of the laser radar), that is, a detected distance of the laser radar when acquiring point cloud data; record the quantity value F of all point clouds whose probability value Si is greater than the probability median value; set the number M of point clouds participating in the laser positioning, wherein M is an ideal number of laser points participating in the positioning and is set according to the performance of the laser head, the performance of the calculator, and the requirements of the algorithm, and M ≥ N; and calculate the probability weighted average of all point clouds participating in the laser positioning based upon the formula: A= (S₁×T^{L1} + S₂×TL² +... + S_{N}×T^{LN}) /N. When calculating, the probability value S of the point cloud is multiplied by a value with the distance weight T as a base and the detection distance L as an exponent, and then an average value of all point cloud values is calculated to obtain the probability weighted average value A. Then the robot calculates the confidence coefficient C through the formula C=A×R^{(N/M-1)}× K^{(F/N-1)}. That is, the confidence coefficient C is equal to the probability weighted average value A multiplied by a value with a laser point weight R as the base and (N/M-1) as the exponent, and a value with a midpoint weight K as the base and (F/N-1) as the exponent. Among them, the distance weight T, the weight of laser points R and the weight of hit points K are predetermined values, wherein the laser points is the number of point clouds participating in the laser positioning, and the hit points is the number of point clouds obtained by a frame of laser. The three parameters T, R, K can be flexible tuned based upon a preferred condition.

Compared with the existing technology, the technical solution of this application performs evaluation and calculation for the confidence coefficient by combining the distribution of point clouds, the hit grid, and the quantity of point clouds, etc., and provides multiple parameters for targeted and flexible tuning to improve the accuracy rate of the confidence coefficient. The evaluation for the confidence coefficient of the positioning can also make related processing more reasonable and accurate.

As one of the embodiments, the robot adjusts the coverage area of the first moment and the coverage area of the second moment according to the confidence coefficients, which comprises steps of: obtaining deviating distances negatively correlated with the confidence coefficients according to the confidence coefficients of the two positionings, and then having a comparison on the deviating distances of the two positionings and obtaining a maximum deviating distance for the two positionings, and then shrinking the coverage area of the first moment and the coverage area of the second moment uniformly inward by the maximum deviating distance.

As one of the embodiments, in step S3, the step of interpolating the positioning poses at the first moment and the second moment to obtain a pose interpolation comprises: inserting an intermediate pose between the positioning poses at the first moment and the second moment. In step S3, the step of constructing a closed graph according to the positioning poses of the first moment and the second moment, the pose interpolation and the adjusted coverage area of the first moment and the adjusted coverage area of the second moment, comprises: making a straight line perpendicular to the right front of the robot at the position of the positioning of the first moment, such a straight line having two intersection points with the edge of the adjusted coverage area of the first moment, and obtaining a first line segment of distance with the two intersection points as endpoints; making a straight line perpendicular to the right front of the robot at the position of the positioning of the second moment, such a straight line having two intersection points with the edge of the adjusted coverage area of the second moment, and obtaining a second line segment of distance with the two intersection points as endpoints; making a straight line perpendicular to the right front of the robot at the position of the intermediate pose on the grid map, and then obtaining a third line segment of distance according to the first line segment of distance or the second line segment of distance; connecting the endpoints of the first line segment of distance, the second line segment of distance and the third line segment of distance with the edges of the adjusted coverage area of the first moment and the adjusted coverage area of the second moment, so as to obtain the closed graph that is a figure having a largest area; wherein, the positioning pose includes a right frontal orientation of the robot at a position of a current positioning.

As one of the embodiments, in step S4, the step of correcting the obstacle labeling detected by a physical collision sensor according to the grid occupied by the closed graph on the grid map and the area of the closed graph comprises: at first, obtaining the grid occupied by the closed graph on the grid map and the area of the closed graph; and then, obtaining an intersection area between the grid occupied by each closed graph on the grid map and the area of the closed graph; and deleting the obstacle labeling detected by a physical collision sensor if the intersection area is greater than a set threshold and there is an obstacle labeling in the grid. The step of obtaining the intersection area between the grid occupied by each closed graph on the grid map and the area of the closed graph comprises: obtaining the area of each grid, and then obtaining positions of edges of the closed graph on each grid to identify a figure located in the closed graph and composed of the edges of the closed graph and the edges of the grid; dividing the figure located in the closed graph and composed of the edges of the closed graph and the edges of the grid into several quadrilaterals, and obtaining the area of each of the quadrilaterals; and totaling the area of each of the quadrilaterals to get the area of the figure located in the closed graph and composed of the edges of the closed graph and the edges of the grid.

Compared with the existing technology, the technical solution of this application combines discrete positioning poses, a pose interpolation, and positioning confidence coefficients to correct the obstacle area detected by a physical collision and improve the accuracy of the obstacle labeling.

As shown in figure 4, P2 is a positioning pose of the second moment, the arrow points to the right front of the robot at this moment, and the peripheral dotted line is an overall coverage area of the machine combined with the shape and size of the machine. When defining the coverage area, at first the position of the positioning is taken as the center of the circle, and then the coverage area is defined by the dotted line under a radius set be a value. The situation that the coverage area is circular is only an example, not a limitation, and the shape and size of the coverage area can be set according to actual needs. P1 is the positioning pose of the first moment, which obtains a same circular coverage area. Then, interpolate the positioning poses at the first moment and the second moment is interpolated to obtain an intermediate pose P'. The direction of the dotted arrow is directed to the right front of the robot corresponding to the intermediate pose P'. The setting of the right front of the robot located in the middle pose P 'is based on the arrow directions of the positioning poses at the first moment and the second moment, which can be a midpoint between the arrows directions of the positioning poses at the first moment and the second moment. A walking path of the robot can also be estimated based on the arrow directions of the positioning poses at the first moment and the second moment, and the direction of the arrow of the intermediate pose P' can be obtained according to the walking path. There are many interpolation methods, all of which are conventional technologies, and will not be described here. The number of interpolations depends on a running speed, a positioning frequency, etc., and is not limited. It is not mandatory to insert only one pose here, but only to illustrate the principle. A deviating distance E that is negatively correlated with the positioning confidence coefficients C can be designed according to actual parameters and requirements, which has the corresponding relationship of E=f(C). By means of calculating the corresponding deviating distance according to the confidence coefficient of the two positionings, taking a larger value Em, and shrinking the coverage area formed by the peripheral dotted lines uniformly and inwardly by the deviating distance Em, an adjusted coverage area formed by the two solid line outlines shown in the figure can be obtained. When the coverage area is a circle, by means of subtracting the deviating distance Em from the radius of the coverage area, a coverage area that is uniformly shrunk inward by the deviating distance Em can be obtained. If the coverage area is a rectangle, the length of the rectangle can be subtracted by the deviating distance Em, and the width of the rectangle can be subtracted by a proportional value based upon a ratio of the width to the length.

Furthermore, after obtaining the adjusted coverage area composed of two solid line outlines, a straight line through point P1 is made, and such a straight line is perpendicular to the right front of the robot and intersects the solid line of the coverage area of the first moment at two points S1 and T1. Similarly, a straight line through point P2 is made, and such a straight line is perpendicular to the right front of the robot and intersects with the solid line of the coverage area of the first moment at two points S2 and T2. Then, as shown in Figure 4, a straight line through point P' is made, and such a straight line is perpendicular to the right front of the robot. According to a length relationship, that is P'S'=P1S1 and P'T'=P1T1, by means of intercepting the endpoint on the straight line passing through the point P', two points of S' and T' can be obtained. Then, for constructing a closed graph, by means of connecting S1S'S2, T1T'T2, and arcs S1R1T1, S2R2T2 a closed graph is formed. The gray area in the figure is the occupancy grids corresponding to the area in the closed graph. By means of calculating the intersection area between each gray grid and the area in the above closed graph, when the calculated value is greater than a preset threshold F, if the grid was previously labeled as an obstacle, the corresponding labeling will be cleared. It can be noted that in calculating, the area of each grid is obtained first, and then the position of the edge of the closed graph on each grid is identified. Then, a figure located in the closed graph and composed of the edges of the closed graph and the edges of the grid is identified. Continuously, the figure located in the closed graph and composed of the edges of the closed graph and the edges of the grid is divided into several quadrilaterals, and the area of each quadrilateral is obtained. Finally, by means of obtaining the area of the figure located in the closed graph and composed of the edges of the closed graph and the edges of the grid, an intersection area between the grids and an area inside the closed graph is obtained.

## Claims

1. A method for a robot to improve the accuracy of an obstacle labeling detected by a physical collision sensor, **characterized by** comprising:
S1, making two positionings of a robot at different moments, and then acquiring positioning poses (P1, P2) of the two positionings on a grid map respectively at a first moment and a second moment of the different moments;
S2, defining a coverage area of the first moment and a coverage area of the second moment respectively according to positions of the two positionings at the first moment and the second moment, calculating confidence coefficients (C) of the two positionings, and adjusting the coverage area of the first moment and the coverage area of the second moment according to the confidence coefficients (C);
S3, interpolating the positioning poses (P1, P2) at the first moment and the second moment to obtain a pose interpolation,(P') and constructing a closed graph according to the positioning poses (P1, P2) at the first moment and the second moment, the pose interpolation (P'), and the adjusted coverage area of the first moment and the adjusted coverage area of the second moment; and
S4, obtaining a grid occupied by the closed graph on the grid map and correcting the obstacle labeling detected by the physical collision sensor according to the grid occupied by the closed graph on the grid map and the area of the closed graph.

2. The method according to claim 1, **characterized in that**
in the step S2 the step of defining a coverage area of the first moment and a coverage area of the second moment respectively according to positions of the two positionings at the first moment and the second moment, comprises:
obtaining the positions of the two positionings on the grid map, and then respectively using the positions of the two positionings as circle centers, with a radius defined by a set value to make circles to obtain the coverage area of the first moment and the coverage area of the second moment.

3. The method according to claim 1, **characterized in that**
in the step S2, the step of calculating confidence coefficients (C) of the two positionings, comprises steps of:
A1: obtaining point clouds (P) participating in a laser positioning, randomly selecting one of the point clouds (Pi), and defining a grid area based on the position of the one point cloud (Pi) on the grid map;
A2: calculating a probability value (Si) of the one point cloud (Pi) on the grid map based upon the information of the grid area, repeating steps A1 and A2 until the probability values (S) of all point clouds (P) participating in the laser positioning on the grid map are obtained;
A3: obtaining detected distances (L) of all point clouds (P) participating in the laser positioning, and then filtering the point clouds to obtain a quantity value (F) of the filtered point clouds;
A4: obtaining a probability weighted average value (A) through the probability values (S) and detected distances (L) of all point clouds (P) participating in the laser positioning on the grid map; and
A5: obtaining the confidence coefficient (C) of a current positioning based on the probability weighted average value (A), the quantity value (N) of all point clouds participating in the laser positioning, the quantity value (F) of the filtered point clouds, and the quantity value (M) of point clouds set to participate in the laser positioning.

4. The method according to claim 1, **characterized in that**
in step A1, the step of defining the grid area based on the position of the one point cloud (Pi) on the grid map, comprises:
obtaining the position of the one point cloud (Pi) on the grid map, and then finding a grid intersection (Ci) on the grid map closest to the position of the one point cloud (Pi); and
defining a grid area having N*N grids on the grid map with the grid intersection (Ci) as the center; wherein, N is a positive integer.

5. The method according to claim 4, **characterized in that**
the step of calculating the probability value (Si) of the one point cloud (Pi) on the grid map based upon the information of the grid area adopts a bicubic interpolation method, which comprises:
obtaining a distance (L) between each grid in the grid area and the one point cloud (Pi), and then obtaining corresponding coefficients of rows and columns in the grid area according to the distance (L);
obtaining a corresponding weight value of each grid according to the corresponding coefficients of the rows and columns, and then obtaining a pixel value of the one point cloud (Pi) through the weight value and by using a summation formula, and then obtaining the probability value (S) corresponding to the pixel value.

6. The method according to claim 4, **characterized in that**
the step of adjusting the coverage area of the first moment and the coverage area of the second moment according to the confidence coefficients, comprises:
obtaining deviating distances (E) that are negatively correlated with the confidence coefficients (C) according to the confidence coefficients (C) of the two positionings, and then having a comparison on the deviating distances of the two positionings; and
obtaining a maximum deviating distance (Em) in the two positionings, and then shrinking the coverage area of the first moment and the coverage area of the second moment uniformly inward by the maximum deviating distance (Em).

7. The method according to claim 1, **characterized in that**
in step S3, the step of interpolating the positioning poses at the first moment and the second moment, comprises:
inserting an intermediate pose (P') between the positioning poses (P1, P2) at the first moment and the second moment.

8. The method according to claim 7, **characterized in that**
in step S3, the step of constructing a closed graph according to the positioning poses (P1, P2) at the first moment and the second moment, the pose interpolation (P'), and the adjusted coverage area of the first moment and the adjusted coverage area of the second moment, comprises:
making a straight line perpendicular to the right front of the robot at the position of the positioning of the first moment, such a straight line having two intersection points (S1, T1) with the edge of the adjusted coverage area of the first moment, and obtaining a first line segment of distance with the two intersection points (S1, T1) as endpoints;
making a straight line perpendicular to the right front of the robot at the position of the positioning of the second moment, such a straight line having two intersection points (S2, T2) with the edge of the adjusted coverage area of the second moment, and obtaining a second line segment of distance with the two intersection points (S2, T2) as endpoints;
making a straight line perpendicular to the right front of the robot at the position of the intermediate pose (P') on the grid map, and then obtaining a third line segment for distance according to the first line segment of distance or the second line segment of distance; and
connecting the endpoints (S1S'S2, T1T'T2) of the first line segment of distance, the second line segment of distance and the third line segment of distance with the edges (S1R1T1, S2R2T2) of the adjusted coverage area of the first moment and the adjusted coverage area of the second moment, so as to obtain the closed graph that is a figure having a largest area;
wherein, the positioning pose includes a right frontal orientation of the robot at a position of a current positioning.

9. The method according to claim 1, **characterized in that**
in step S4, the step of correcting the obstacle labeling according to the grid occupied by the closed graph on the grid map and the area of the closed graph comprises:
obtaining the grid occupied by the closed graph on the grid map and the area of the closed graph;
obtaining an intersection area between the grid occupied by each closed graph on the grid map and the area of the closed graph; and
deleting the obstacle labeling if the intersection area is greater than a set threshold (F) and there is an obstacle labeling in the grid.

10. The method according to claim 9, **characterized in that**
the step of obtaining the intersection area between the grid occupied by each closed graph on the grid map and the area of the closed graph comprises:
obtaining the area of each grid, and then obtaining positions of edges of the closed graph on each grid to identify a figure located in the closed graph and composed of the edges of the closed graph and the edges of the grid;
dividing the figure located in the closed graph and composed of the edges of the closed graph and the edges of the grid into several quadrilaterals, and obtaining the area of each of the quadrilaterals; and
totaling the area of each of the quadrilaterals to get the area of the figure located in the closed graph and composed of the edges of the closed graph and the edges of the grid.

## Patentansprüche

1. Ein Verfahren zum Verbessern der Genauigkeit einer von einem physikalischen Kollisionssensor erfassenden Hinderniskennzeichnung für einen Roboter, **dadurch gekennzeichnet, dass** das Verfahren umfasst:
S1: Durchführen zweier Positionierungen eines Roboters zu unterschiedlichen Zeitpunkten und anschließendes Erfassen der Positionspose (P1, P2) der beiden Positionierungen auf einer Gitterkarte jeweils zu einem ersten Zeitpunkt und einem zweiten Zeitpunkt von den unterschiedlichen Zeitpunkte;
S2: Definieren eines Abdeckungsbereichs des ersten Zeitpunkts und eines Abdeckungsbereichs des zweiten Zeitpunkts jeweils gemäß den Positionen der beiden Positionierungen zum ersten Zeitpunkt und zum zweiten Zeitpunkt, Berechnen von Konfidenzkoeffizienten (C) der beiden Positionierungen und Anpassen des Abdeckungsbereichs des ersten Zeitpunkts und des Abdeckungsbereichs des zweiten Zeitpunkts gemäß den Konfidenzkoeffizienten (C);
S3: Interpolieren der Positionsposen (P1, P2) zum ersten Zeitpunkt und zum zweiten Zeitpunkt, um eine Poseninterpolation (P') zu erhalten, und Konstruieren einer geschlossenen Figur gemäß den Positionsposen (P1, P2) zum ersten Zeitpunkt und zum zweiten Zeitpunkt, der Poseninterpolation (P') und des angepassten Abdeckungsbereichs des ersten Zeitpunkts und des angepassten Abdeckungsbereichs des zweiten Zeitpunkts; und
S4: Erhalten eines durch die geschlossene Figur auf der Gitterkarte belegten Gitters und Korrigieren der Hinderniskennzeichnung, die durch den physikalischen Kollisionssensor erfasst wurde, gemäß dem durch die geschlossene Figur auf der Gitterkarte belegten Gitter und der Fläche der geschlossenen Figur.

2. Das Verfahren nach Anspruch 1, **dadurch gekennzeichnet, dass**
in Schritt S2, der Schritt des Definierens eines Abdeckungsbereichs des ersten Zeitpunkts und eines Abdeckungsbereichs des zweiten Zeitpunkts jeweils gemäß den Positionen der beiden Positionierungen zum ersten Zeitpunkt und zum zweiten Zeitpunkt umfasst:
Erhalten der Positionen der beiden Positionierungen auf der Gitterkarte und dann jeweiliges Verwenden der Positionen der beiden Positionierungen als Kreismittelpunkte, mit einem durch einen festgelegten Wert definierten Radius, um Kreise zu zeichnen, um den Abdeckungsbereich des ersten Zeitpunkts und den Abdeckungsbereich des zweiten Zeitpunkts zu erhalten.

3. Das Verfahren nach Anspruch 1, **dadurch gekennzeichnet, dass**
in Schritt S2, der Schritt des Berechnens von Konfidenzkoeffizienten (C) der beiden Positionierungen folgende Schritte umfasst:
A1: Erhalten von Punktwolken (P), die an einer Laserpositionierung teilnehmen, zufälliges Auswählen einer der Punktwolken (Pi) und Definieren eines Gitterbereichs basierend auf der Position der einen Punktwolke (Pi) auf der Gitterkarte;
A2: Berechnen eines Wahrscheinlichkeitswerts (Si) der einen Punktwolke (Pi) auf der Gitterkarte basierend auf den Informationen des Gitterbereichs, Wiederholen der Schritte A1 und A2, bis die Wahrscheinlichkeitswerte (S) aller an der Laserpositionierung teilnehmenden Punktwolken (P) auf der Gitterkarte erhalten sind;
A3: Erhalten der erfassten Entfernungen (L) aller an der Laserpositionierung teilnehmenden Punktwolken (P) und dann Filtern der Punktwolken, um einen Mengenwert (F) der gefilterten Punktwolken zu erhalten;
A4: Erhalten eines wahrscheinlichkeitsgewichteten Durchschnittswerts (A) durch die Wahrscheinlichkeitswerte (S) und erfassten Entfernungen (L) aller an der Laserpositionierung teilnehmenden Punktwolken (P) auf der Gitterkarte; und
A5: Erhalten des Konfidenzkoeffizienten (C) einer aktuellen Positionierung basierend auf dem wahrscheinlichkeitsgewichteten Durchschnittswert (A), dem Mengenwert (N) aller an der Laserpositionierung teilnehmenden Punktwolken, dem Mengenwert (F) der gefilterten Punktwolken und dem Mengenwert (M) der für die Teilnahme an der Laserpositionierung festgelegten Punktwolken.

4. Das Verfahren nach Anspruch 1, **dadurch gekennzeichnet, dass**
in Schritt A1, der Schritt des Definierens des Gitterbereichs basierend auf der Position der einen Punktwolke (Pi) auf der Gitterkarte umfasst:
Erhalten der Position der einen Punktwolke (Pi) auf der Gitterkarte und dann Finden eines Gitterschnittpunkts (Ci) auf der Gitterkarte, der der Position der einen Punktwolke (Pi) am nächsten liegt; und
Definieren eines Gitterbereichs mit N*N Gittern auf der Gitterkarte mit dem Gitterschnittpunkt (Ci) als Mittelpunkt; wobei N eine positive ganze Zahl ist.

5. Das Verfahren nach Anspruch 4, **dadurch gekennzeichnet, dass**
der Schritt des Berechnens des Wahrscheinlichkeitswerts (Si) der einen Punktwolke (Pi) auf der Gitterkarte basierend auf den Informationen des Gitterbereichs eine bikubische Interpolationsmethode verwendet, die umfasst:
Erhalten einer Entfernung (L) zwischen jedem Gitter im Gitterbereich und der einen Punktwolke (Pi) und dann Erhalten entsprechender Koeffizienten von Zeilen und Spalten im Gitterbereich gemäß der Entfernung (L);
Erhalten eines entsprechenden Gewichtswerts für jedes Gitter gemäß den entsprechenden Koeffizienten von Zeilen und Spalten und dann Erhalten eines Pixelwerts der einen Punktwolke (Pi) durch den Gewichtswert und unter Verwendung einer Summationsformel und dann Erhalten des dem Pixelwert entsprechenden Wahrscheinlichkeitswerts (S).

6. Das Verfahren nach Anspruch 4, **dadurch gekennzeichnet, dass**
der Schritt des Anpassens des Abdeckungsbereichs des ersten Zeitpunkts und des Abdeckungsbereichs des zweiten Zeitpunkts gemäß den Konfidenzkoeffizienten umfasst:
Erhalten von Abweichungsentfernungen (E), die negativ mit den Konfidenzkoeffizienten (C) korreliert sind, gemäß den Konfidenzkoeffizienten (C) der beiden Positionierungen und dann Durchführen eines Vergleichs der Abweichungsentfernungen der beiden Positionierungen; und
Erhalten einer maximalen Abweichungsentfernung (Em) in den beiden Positionierungen und dann gleichmäßiges Schrumpfen des Abdeckungsbereichs des ersten Zeitpunkts und des Abdeckungsbereichs des zweiten Zeitpunkts nach innen um die maximale Abweichungsentfernung (Em).

7. Das Verfahren nach Anspruch 1, **dadurch gekennzeichnet, dass**
in Schritt S3, der Schritt des Interpolierens der Positionsposen zum ersten Zeitpunkt und zum zweiten Zeitpunkt umfasst:
Einfügen einer Zwischenpose (P') zwischen den Positionsposen (P1, P2) zum ersten Zeitpunkt und zum zweiten Zeitpunkt.

8. Das Verfahren nach Anspruch 7, **dadurch gekennzeichnet, dass**
in Schritt S3, der Schritt des Konstruierens einer geschlossenen Figur gemäß den Positionsposen (P1, P2) zum ersten Zeitpunkt und zum zweiten Zeitpunkt, der Poseninterpolation (P') und des angepassten Abdeckungsbereichs des ersten Zeitpunkts und des angepassten Abdeckungsbereichs des zweiten Zeitpunkts umfasst:
Zeichnen einer geraden Linie senkrecht zur rechten Vorderseite des Roboters an der Position der Positionierung des ersten Zeitpunkts, wobei eine solche gerade Linie zwei Schnittpunkte (S1, T1) mit der Kante des angepassten Abdeckungsbereichs des ersten Zeitpunkts hat, und Erhalten eines ersten Liniensegments für die Entfernung mit den beiden Schnittpunkten (S1, T1) als Endpunkte;
Zeichnen einer geraden Linie senkrecht zur rechten Vorderseite des Roboters an der Position der Positionierung des zweiten Zeitpunkts, wobei eine solche gerade Linie zwei Schnittpunkte (S2, T2) mit der Kante des angepassten Abdeckungsbereichs des zweiten Zeitpunkts hat, und Erhalten eines zweiten Liniensegments für die Entfernung mit den beiden Schnittpunkten (S2, T2) als Endpunkte;
Zeichnen einer geraden Linie senkrecht zur rechten Vorderseite des Roboters an der Position der Zwischenpose (P') auf der Gitterkarte und dann Erhalten eines dritten Liniensegments für die Entfernung gemäß dem ersten Liniensegment für die Entfernung oder dem zweiten Liniensegment für die Entfernung; und
Verbinden der Endpunkte (S1S'S2, T1T'T2) des ersten Liniensegments für die Entfernung, des zweiten Liniensegments für die Entfernung und des dritten Liniensegments für die Entfernung mit den Kanten **(S1R1T1,** S2R2T2) des angepassten Abdeckungsbereichs des ersten Zeitpunkts und des angepassten Abdeckungsbereichs des zweiten Zeitpunkts, um so die geschlossene Figur zu erhalten, die eine Figur mit einer größten Fläche ist;
wobei die Positionspose eine rechts-vorne-Ausrichtung des Roboters an einer Position einer aktuellen Positionierung einschließt.

9. Das Verfahren nach Anspruch 1, **dadurch gekennzeichnet, dass**
in Schritt S4, der Schritt des Korrigierens der Hinderniskennzeichnung gemäß dem durch die geschlossene Figur auf der Gitterkarte belegten Gitter und der Fläche der geschlossenen Figur umfasst:
Erhalten des durch die geschlossene Figur auf der Gitterkarte belegten Gitters und der Fläche der geschlossenen Figur;
Erhalten einer Schnittfläche zwischen dem durch jede geschlossene Figur auf der Gitterkarte belegten Gitter und der Fläche der geschlossenen Figur; und
Löschen der Hinderniskennzeichnung, wenn die Schnittfläche größer als ein festgelegter Schwellenwert (F) ist und eine Hinderniskennzeichnung im Gitter vorhanden ist.

10. Das Verfahren nach Anspruch 9, **dadurch gekennzeichnet, dass**
der Schritt des Erhaltens der Schnittfläche zwischen dem durch jede geschlossene Figur auf der Gitterkarte belegten Gitter und der Fläche der geschlossenen Figur umfasst:
Erhalten der Fläche jedes Gitters und dann Erhalten von Positionen von Kanten der geschlossenen Figur auf jedem Gitter, um eine Figur zu identifizieren, die in der geschlossenen Figur liegt und aus den Kanten der geschlossenen Figur und den Kanten des Gitters besteht;
Teilen der Figur, die in der geschlossenen Figur liegt und aus den Kanten der geschlossenen Figur und den Kanten des Gitters besteht, in mehrere Vierecke und Erhalten der Fläche jedes der Vierecke; und
Aufsummieren der Fläche jedes der Vierecke, um die Fläche der Figur zu erhalten, die in der geschlossenen Figur liegt und aus den Kanten der geschlossenen Figur und den Kanten des Gitters besteht.

## Revendications

1. Une méthode pour qu'un robot améliore la précision d'un étiquetage d'obstacle détecté par un capteur de collision physique, **caractérisée en ce qu'**elle comprend :
S1, effectuer deux positionnements d'un robot à des instants différents, puis acquérir les poses de positionnement (P1, P2) des deux positionnements sur une carte de grille respectivement à un premier instant et à un second instant des différents instants ;
S2, définir une zone de couverture du premier instant et une zone de couverture du second instant respectivement selon les positions des deux positionnements au premier instant et au second instant, calculer des coefficients de confiance (C) des deux positionnements, et ajuster la zone de couverture du premier instant et la zone de couverture du second instant selon les coefficients de confiance (C) ;
S3, interpoler les poses de positionnement (P1, P2) au premier instant et au second instant pour obtenir une interpolation de pose (P') et construire un graphe fermé selon les poses de positionnement (P1, P2) au premier instant et au second instant, l'interpolation de pose (P'), et la zone de couverture ajustée du premier instant et la zone de couverture ajustée du second instant ; et
S4, obtenir une grille occupée par le graphe fermé sur la carte de grille et corriger l'étiquetage d'obstacle détecté par le capteur de collision physique selon la grille occupée par le graphe fermé sur la carte de grille et l'aire du graphe fermé.

2. La méthode selon la revendication 1, **caractérisée en ce que**
dans l'étape S2, l'étape de définition d'une zone de couverture du premier instant et d'une zone de couverture du second instant respectivement selon les positions des deux positionnements au premier instant et au second instant, comprend :
obtenir les positions des deux positionnements sur la carte de grille, puis utiliser respectivement les positions des deux positionnements comme centres de cercles, avec un rayon défini par une valeur définie pour tracer des cercles afin d'obtenir la zone de couverture du premier instant et la zone de couverture du second instant.

3. La méthode selon la revendication 1, **caractérisée en ce que**
dans l'étape S2, l'étape de calcul des coefficients de confiance (C) des deux positionnements, comprend les étapes de :
A1: obtenir des nuages de points (P) participant à un positionnement laser, sélectionner aléatoirement l'un des nuages de points (Pi), et définir une zone de grille basée sur la position de l'un des nuages de points (Pi) sur la carte de grille ;
A2: calculer une valeur de probabilité (Si) de l'un des nuages de points (Pi) sur la carte de grille en fonction des informations de la zone de grille, répéter les étapes A1 et A2 jusqu'à ce que les valeurs de probabilité (S) de tous les nuages de points (P) participant au positionnement laser sur la carte de grille soient obtenues ;
A3: obtenir les distances détectées (L) de tous les nuages de points (P) participant au positionnement laser, puis filtrer les nuages de points pour obtenir une valeur de quantité (F) des nuages de points filtrés ;
A4: obtenir une valeur moyenne pondérée par probabilité (A) à travers les valeurs de probabilité (S) et les distances détectées (L) de tous les nuages de points (P) participant au positionnement laser sur la carte de grille ; et
A5: obtenir le coefficient de confiance (C) d'un positionnement actuel basé sur la valeur moyenne pondérée par probabilité (A), la valeur de quantité (N) de tous les nuages de points participant au positionnement laser, la valeur de quantité (F) des nuages de points filtrés, et la valeur de quantité (M) de nuages de points définis pour participer au positionnement laser.

4. La méthode selon la revendication 1, **caractérisée en ce que**
dans l'étape A1, l'étape de définition de la zone de grille basée sur la position de l'un des nuages de points (Pi) sur la carte de grille, comprend :
obtenir la position de l'un des nuages de points (Pi) sur la carte de grille, puis trouver une intersection de grille (Ci) sur la carte de grille la plus proche de la position de l'un des nuages de points (Pi) ; et
définir une zone de grille ayant N*N grilles sur la carte de grille avec l'intersection de grille (Ci) comme centre ; où N est un entier positif.

5. La méthode selon la revendication 4, **caractérisée en ce que**
l'étape de calcul de la valeur de probabilité (Si) de l'un des nuages de points (Pi) sur la carte de grille en fonction des informations de la zone de grille adopte une méthode d'interpolation bicubique, qui comprend :
obtenir une distance (L) entre chaque grille dans la zone de grille et l'un des nuages de points (Pi), puis obtenir les coefficients correspondants de lignes et de colonnes dans la zone de grille selon la distance (L) ;
obtenir une valeur de poids correspondante de chaque grille selon les coefficients correspondants de lignes et de colonnes, puis obtenir une valeur de pixel de l'un des nuages de points (Pi) à travers la valeur de poids et en utilisant une formule de sommation, puis obtenir la valeur de probabilité (S) correspondant à la valeur de pixel.

6. La méthode selon la revendication 4, **caractérisée en ce que**
l'étape d'ajustement de la zone de couverture du premier instant et de la zone de couverture du second instant selon les coefficients de confiance, comprend :
obtenir des distances de déviation (E) qui sont corrélées négativement avec les coefficients de confiance (C) selon les coefficients de confiance (C) des deux positionnements, puis effectuer une comparaison sur les distances de déviation des deux positionnements ; et
obtenir une distance de déviation maximale (Em) dans les deux positionnements, puis rétrécir uniformément vers l'intérieur la zone de couverture du premier instant et la zone de couverture du second instant par la distance de déviation maximale (Em).

7. La méthode selon la revendication 1, **caractérisée en ce que**
dans l'étape S3, l'étape d'interpolation des poses de positionnement au premier instant et au second instant, comprend :
insérer une pose intermédiaire (P') entre les poses de positionnement (P1, P2) au premier instant et au second instant.

8. La méthode selon la revendication 7, **caractérisée en ce que**
dans l'étape S3, l'étape de construction d'un graphe fermé selon les poses de positionnement (P1, P2) au premier instant et au second instant, l'interpolation de pose (P'), et la zone de couverture ajustée du premier instant et la zone de couverture ajustée du second instant, comprend :
tracer une ligne droite perpendiculaire à l'avant droit du robot à la position du positionnement du premier instant, une telle ligne droite ayant deux points d'intersection (S1, T1) avec le bord de la zone de couverture ajustée du premier instant, et obtenir un premier segment de ligne de distance avec les deux points d'intersection (S1, T1) comme extrémités ;
tracer une ligne droite perpendiculaire à l'avant droit du robot à la position du positionnement du second instant, une telle ligne droite ayant deux points d'intersection (S2, T2) avec le bord de la zone de couverture ajustée du second instant, et obtenir un second segment de ligne de distance avec les deux points d'intersection (S2, T2) comme extrémités ;
tracer une ligne droite perpendiculaire à l'avant droit du robot à la position de la pose intermédiaire (P') sur la carte de grille, puis obtenir un troisième segment de ligne pour la distance selon le premier segment de ligne de distance ou le second segment de ligne de distance ; et
connecter les extrémités (S1S'S2, T1T'T2) du premier segment de ligne de distance, du second segment de ligne de distance et du troisième segment de ligne de distance avec les bords (S1RI1T1, S2R2T2) de la zone de couverture ajustée du premier instant et de la zone de couverture ajustée du second instant, afin d'obtenir le graphe fermé qui est une figure ayant une aire la plus grande ;
où, la pose de positionnement inclut une orientation frontale droite du robot à une position d'un positionnement actuel.

9. La méthode selon la revendication 1, **caractérisée en ce que**
dans l'étape S4, l'étape de correction de l'étiquetage d'obstacle selon la grille occupée par le graphe fermé sur la carte de grille et l'aire du graphe fermé comprend :
obtenir la grille occupée par le graphe fermé sur la carte de grille et l'aire du graphe fermé ; obtenir une aire d'intersection entre la grille occupée par chaque graphe fermé sur la carte de grille et l'aire du graphe fermé ; et
supprimer l'étiquetage d'obstacle si l'aire d'intersection est supérieure à un seuil défini (F) et qu'il y a un étiquetage d'obstacle dans la grille.

10. La méthode selon la revendication 9, **caractérisée en ce que**
l'étape d'obtention de l'aire d'intersection entre la grille occupée par chaque graphe fermé sur la carte de grille et l'aire du graphe fermé comprend :
obtenir l'aire de chaque grille, puis obtenir les positions des bords du graphe fermé sur chaque grille pour identifier une figure située dans le graphe fermé et composée des bords du graphe fermé et des bords de la grille ;
diviser la figure située dans le graphe fermé et composée des bords du graphe fermé et des bords de la grille en plusieurs quadrilatères, et obtenir l'aire de chacun des quadrilatères ; et
totaliser l'aire de chacun des quadrilatères pour obtenir l'aire de la figure située dans le graphe fermé et composée des bords du graphe fermé et des bords de la grille.
